(19) Europäisches Patentamt / European Patent Office / Office européen des brevets

(11) **EP 2 446 257 B1**

(12) **EUROPEAN PATENT SPECIFICATION**

(45) Date of publication and mention
of the grant of the patent:
**03.06.2020  Bulletin 2020/23**

(21) Application number: **10792416.9**

(22) Date of filing: **21.06.2010**

(51) Int Cl.:
*G01N 30/86* (2006.01)    *B01D 15/14* (2006.01)
*B01D 15/18* (2006.01)    *B01D 15/42* (2006.01)
*G01N 30/42* (2006.01)    *G01N 30/46* (2006.01)
*G01N 30/78* (2006.01)    *G01N 30/88* (2006.01)

(86) International application number:
**PCT/SE2010/050700**

(87) International publication number:
**WO 2010/151214 (29.12.2010 Gazette 2010/52)**

(54) **A METHOD IN A CHROMATOGRAPHY SYSTEM**

VERFAHREN IN EINEM CHROMATOGRAPHIESYSTEM

PROCÉDÉ DANS UN SYSTÈME DE CHROMATOGRAPHIE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **26.06.2009   SE 0950494**

(43) Date of publication of application:
**02.05.2012   Bulletin 2012/18**

(60) Divisional application:
**20168846.2**

(73) Proprietor: **GE Healthcare Bio-Sciences AB**
**75184 Uppsala (SE)**

(72) Inventors:
• **BÄNGTSSON, Petra**
  **S-751 84 Uppsala (SE)**
• **ESTRADA, Erik**
  **S-751 84 Uppsala (SE)**
• **LACKI, Karol**
  **S-751 84 Uppsala (SE)**
• **SKOGLAR, Helena**
  **S-751 84 Uppsala (SE)**

(74) Representative: **Cavill, Ross David et al**
**GE Healthcare UK Limited**
**Amersham Place**
**Little Chalfont, Buckinghamshire HP7 9NA (GB)**

(56) References cited:
WO-A1-2008/153472    WO-A2-92/02815
US-A- 5 457 260    US-A1- 2002 134 718
US-B1- 7 178 386

## Description

TECHNICAL FIELD

The present invention relates to a method for determining binding capacities of a chromatography column, a chromatography system and a method for controlling a chromatography system.

BACKGROUND OF THE INVENTION

Binding capacity of a chromatography column for the solute is a very important factor in process chromatography. The binding capacity directly influences the productivity and cost of chromatography step. The binding capacity is defined either in terms of dynamic/breakthrough capacity or as the maximum binding capacity. The dynamic capacity depends on the conditions at which the solution flows through the column packed with chromatography medium, such as residence time defined as the ratio between column volume and feed flow rate. The maximum binding capacity represents a breakthrough capacity of the column if the residence time was infinitely long. The initial breakthrough capacity is defined as the amount of binding solutes taken up by a column at the point when the solutes are first detected in the effluent. The breakthrough capacity can also be defined as a capacity at a given percentage of breakthrough, where the percentage represents the amount of binding solute present in the effluent from the column expressed in percent of the solute present in the feed. According to this definition the maximum binding capacity will be equal to breakthrough capacity at 100% of breakthrough, i.e., at the point where no more solute can bind to the column. Therefore, in order to determine maximum capacity, the breakthrough capacities are measured at different levels of breakthrough, where the levels are defined by levels of concentration of solutes measured in the effluent from the column during sample loading. Often these concentrations are determined by continuously monitoring a signal in a flow through a detector placed in the effluent line. The plot of these concentrations (signal) against time (or volume or mass loaded) is called a breakthrough curve. Location of the breakthrough on a chromatogram and its shape is related to how much solute can bind on the column and how quickly all adsorption sites are saturated with the solute. It also shows how much more solute can be bound to the column at any given time. Breakthrough binding capacity for the solute in the presence of the impurities is one of the most critical parameters to optimize when developing a purification protocol. Because impurities more than often have similar light adsorbing properties as the solute determination of binding breakthrough capacities is a tedious and laborious work. In a typical experiment effluent from the column is collected in series of fraction, which are subsequently analyzed for the solute using high resolution techniques, such HPLC. Thus the determination of binding capacities for a chromatography column is rather complicated and in cases where the feed solution concentration is randomly varying during the feed application onto a chromatography column the true breakthrough capacities are impossible to measure. The latter is very important if one wants to operate a column at the optimum process conditions. For instance, it can be shown that under certain conditions a maximum productivity of a capture chromatography step is obtained when the solute of interest reaches a certain value of its concentration in the column effluent, for instance a 10% of its initial concentration. If the breakthrough capacity is determined according to the method described above, it is impossible to terminate loading of the column at exact 10% breakthrough if either feed concentration or process conditions, including flow rate and/or chromatography media properties, vary with time in unpredictable manner.

Furthermore, determination of breakthrough capacities at different levels of breakthrough under varying process conditions is very important in the case of continuous chromatography. In continuous chromatography, several identical columns are connected in an arrangement that allows columns to be operated in series and/or in parallel, depending on the method requirements. Thus, all columns can be run in principle simultaneously, but slightly shifted in method steps. The procedure can be repeated, so that each column is loaded, eluted, and regenerated several times in the process. Compared to 'conventional' chromatography, wherein a single chromatography cycle is based on several consecutive steps, such as loading, wash, elution and regeneration, in continuous chromatography based on multiple identical columns all these steps occur simultaneously but on different columns each. Continuous chromatography operation results in a better utilization of chromatography resin, reduced processing time and reduced buffer requirements, all of which benefits process economy. Continuous chromatography is sometimes denoted simulated moving bed (SMB) chromatography. Simulated moving bed chromatography is an example of periodic counter current process, because periodically all the chromatography columns comprising the system are simultaneously moved in the direction opposite to the sample flow. The apparent movement of the columns is realized by appropriate redirections of inlet and outlet stream to/from the columns.

Bishop et al ("Simulated Moving Bed technology in Biopharmaceutical Processing", Bischops, M. and Pennings, M., Recovery Biological Products XI, (2003) Banff, Alberta, Canada) discloses a continuous chromatography method based on simulated moving bed (SMB) technology, which has been successfully employed for the laboratory scale purification of IgG with a protein A affinity resin. Despite the fact that the multi-column and multi-zone continuous approach provided by SMB greatly increases process efficiency, SMB systems have not been utilized to date for cGMP biopharmaceutical production, mainly because of system complexity from both hardware and operational perspectives. The operational perspective is of particular interest as the continuous methods are more complex and require many operations (steps) to occur simultaneously at very precisely predefined points in time. In contrast to batch chromatography, implementation of safety factors to account for process variability is not recommended for continuous processes as by definitions they operate on the assumption of a steady state that can only be established if there is no variability in the input to the system.

Heeter et al (Heeter, G.A. and Liapis, A.I., J. Chrom A, 711 (1995)) has suggested, as an alternative to a typical four zone SMB system, a method based on a three column periodic counter-current chromatography (3C-PCC) principle. More recently, Lacki et al ("Protein A Counter-Current Chromatography for Continuous Antibody Purification", Lacki, K.M. and Bryntesson, L.M., ACS (2004) Anaheim, CA USA) described the use of such a 3C-PCC system for IgG adsorption to MabSelect™ affinity resin. This 3C-PCC method requires simpler hardware and easier operation than the typical four zone SMB system, directly reducing the cost associated with the capital equipment and the maintenance of the system.

In fact, simulated moving bed technology has been utilised for decades in various other fields. For example, US 3,291,726 (Universal Oil Products) described as early as 1966 a continuous simulated counter-current sorption process for the petrochemical industry.

Historically, essential factors for a reliable continuous process are: 1) the quality of the columns used, and more specifically the similarity or even identity between columns, 2) constant feed composition, and 3) hardware reliance, more specifically constant flow rate delivered by pumps. If the columns are not identical, the theoretical calculations typically used to design continuous chromatography process will not be correct, and it will become difficult to design an efficient and robust continuous chromatography process. The same argument applies if feed concentration and flow rates vary with time in an unexpected manner. Therefore, for scale-up considerations, having identical columns, reliable pumps in the system is essential. However, the packing of a column with a chromatography media is very complex in order to obtain repeatable results. Even small differences in the number of plates or other packing properties can have a huge effect on the end result. Furthermore, since capacities of chromatography resins typically change during resins lifetime/usage the process conditions chosen for a fresh resin will not be applicable for a resin that has been used several times. If also the feed solution concentration will vary it will be even more complicated to design an efficient continuous chromatography process that would operate at its optimum all the time. WO92/02815, WO2008/153472, and US5457260 disclose prior art apparatus and methods.

SUMMARY OF THE INVENTION

An object of the invention is to provide reliable and dynamic determination and monitoring of binding capacities of chromatography columns in a periodic counter current (PCC) system. This is achieved by a method according to claim 1 and by a chromatography system according to claim 8. According to the invention the feed signal and the effluent signals are used to continuously determine binding capacities of the chromatography columns.

Further suitable embodiments of the invention are defined in the dependent claims.

BRIEF DESCRIPTION OF THE DRAWINGS

Figure 1 shows schematically a chromatography column and two detectors forming part of a system according to the invention.

Figure 2 is a diagram showing the signals from the two detectors in Figure 1.

Figure 3 shows schematically a three column periodic counter current (3C-PCC) system comprising four detectors according to the invention.

Figure 4 a, b, and c shows schematically three valves of Figure 3.

Figure 5 shows schematically a four column periodic counter current (4C-PCC) system according to the invention.

Figure 6 is a diagram showing the signals detected from the five detectors in the 4C-PCC system shown in Figure 5.

DETAILED DESCRIPTION OF THE EMBODIMENTS

To circumvent the difficulties discussed in relation to prior art a real time control algorithm based on feedback like control principle is provided by the present invention. Accordingly, methods for assessing state of different columns at any given moment of the process are of particular interest. For instance, knowing of a binding capacity of a chromatography column at a particular level of breakthrough would allow one to asses if the column can still bind solutes and how much solute still can be bound before the column reaches full saturation. Similarly, it is of paramount interest from the process yield perspective to know if the initial breakthrough capacity has been reached, as at this point the solute will be found in the effluent stream from the column and, if no proper action is taken, would be direct to waste or would be collected together with other non-binding components.

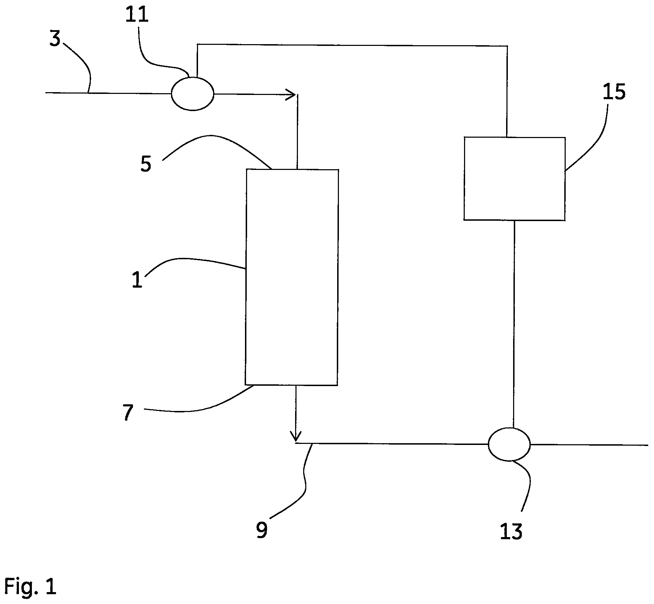

Fig. 1 shows schematically a part of a chromatography system according to the invention. The chromatography system comprises a chromatography column 1. It further comprises a feed line 3 connected to an inlet end 5 of the chromatography column 1. The sample to be passed through the column 1 can be added through the feed line 3. The system further comprises an effluent line 9 connected to the opposite end, i.e. the outlet end 7 of the chromatography column 1. The sample having passed the chromatography column 1 can pass through the effluent line 9. The chromatography system comprises further according to the invention a first detector 11 positioned somewhere along the feed line 3. The first detector 11 is adapted to detect a feed signal being representative of the composition of the feed material (sample) passing in the feed line. Furthermore the chromatography system comprises a second detector 13 positioned somewhere along the effluent line 9 and adapted to detect an effluent signal being representative of the composition of the sample flowing out from the column 1 through the effluent line 9. The first and the second detectors 11, 13 are suitably the same type of detectors and in one embodiment this is a UV detector, i.e. measuring the UV absorbance of the sample. Other possible types of detectors are measuring pH, conductivity, light scattering, fluorescence, IR or visible light. If the different detectors in the system not are the same type of detectors the detected signals need to be correlated when used for the further calculations according to the invention.

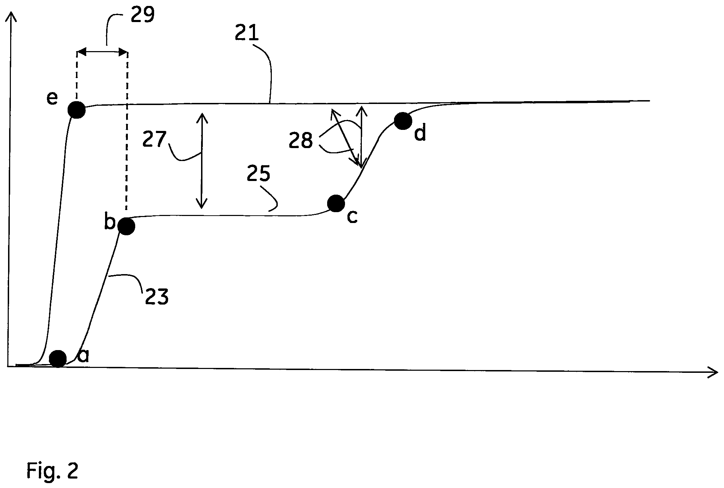

Furthermore, according to the invention, the first and second detectors 11, 13 are both connected to a determining unit 15. Said unit analyzes the signals detected in the first and second detectors 11, 13 in order to determine binding capacities of the chromatography column. Possible signals from the first and second detectors 11, 13 are shown in Figure 2 in a diagram showing signal strength over time. The feed signal is denoted 21 and is the signal from the first detector 11. It is essentially a straight line since the feed sample is in this case and during this time window constant in composition. The effluent signal is denoted 23 and is the signal from the second detector 13. The effluent signal 23 will start rise from zero at point a, as soon as some of the sample has passed the column 1 and entered the passage of the effluent line 9 where the second detector 13 is positioned. The signal will then rise until point b, where it levels out into a plateau 25. This plateau 25 arises when all the non binding components in the feed have passed the column. A breakthrough point c is further defined after the plateau 25 when the signal 23 starts to rise again. This is due to the fact that the chromatography media in the column 1 starts to get saturated and some of the parts of the sample that should have been bound in the column start to break through the column. A breakthrough point d is further defined as the signal 23 approaches the signal 21. This point is defined as a saturation point and represents the moment when chromatography media is almost fully saturated with the binding components of the sample.

According to an embodiment at any given point in time a Deltasignal is calculated which is defined to be the feed signal 21 chosen from signals measured between the given time reduced by a specified time delay and the given time minus the effluent signal 23 measured at the given time. The feed signal 21 measures the feature (in one embodiment UV absorbance) for both non binding and binding components of the feed. The time delay is defined as a time for a non binding compound in the sample to travel from the feed detector 11 (Figure 1) to the effluent detector 13 (Figure 1). The time delay can be measured applying the residence time distribution theory, or it can be measured by subtracting the time when signal 21 first reaches the highest plateau e from the time when signal 23 reaches the plateau 25. This is illustrated as arrow 29 in Figure 2. The deltasignal at one specific point in time is illustrated as arrow 28 in Figure 2. As indicated this arrow 28 can be inclined if the time delay is compensated for.

According to an embodiment a Deltasignalmax 27 is calculated which is defined to be the feed signal 21 minus the signal level for the effluent signal 23 when it is in the plateau 25. This Deltasignalmax 27 can then be used for defining suitable levels for the breakthrough point and the saturation point for example. The breakthrough point c can suitably be defined to be a certain predefined percentage of the Deltasignalmax, for example somewhere in the span of 1-10 % or more suitably in the span of 1-3 % and the Saturation point d can suitably be defined to be a certain predefined percentage of the Deltasignalmax, for example somewhere in the span of 60-90 % or more suitable in the span of 70-80%.

One advantage with this approach of determining the breakthrough point and the saturation point is that this could be done automatically in real time and it is independent of the feed concentration since the feed signal is automatically compensated for.

In a further aspect of the invention these determinations of binding capacities, for example breakthrough and saturation points, are used for automatically controlling the start and stop of the different chromatography process steps, i.e. when a certain breakthrough or saturation point level has been reached a control system can control the chromatography system to proceed to the next process step such as redirecting column effluent to a different collection point, or to stop loading step and initiate column wash step.

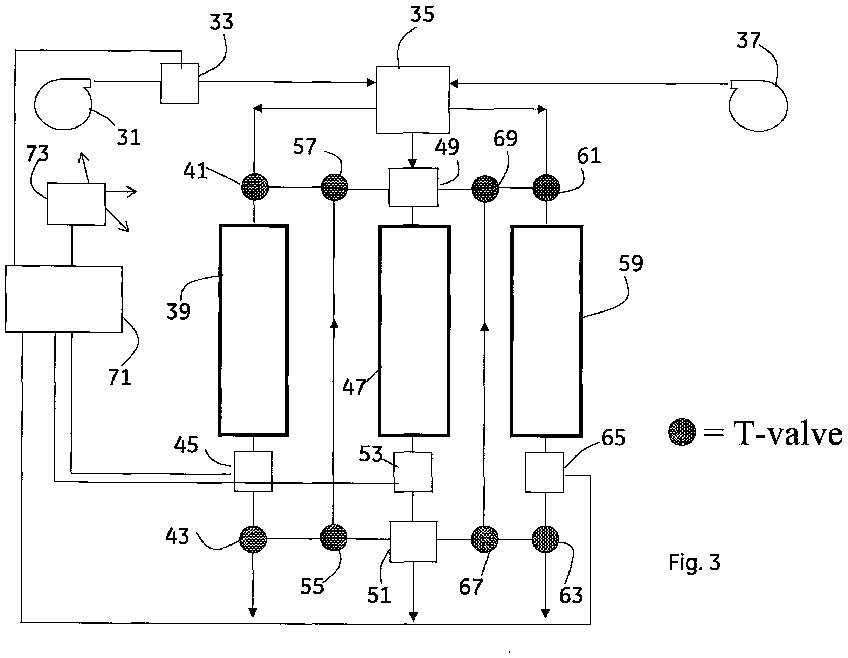

According to the invention the chromatography system comprises two or more chromatography columns, in a so called periodic counter current (PCC) system. In the periodic counter current system, most of the time the feed is passed through at least two columns connected in series. The series is often called a loading zone and addition and removal of columns in/from the loading zone is based on predetermined breakthrough and saturation points for the last and the first column in series, respectively. In Figure 3 such a system according to the invention comprising three columns is shown schematically. The benefits of the invention are even more explicit in this example because one common problem in PCC systems is that in order to be able to get an efficient system operation the columns used in the system need to be as identical as possible and the feed composition and flow rates should be constant, or at least their changes with process time should be known a priori. With the invention any differences in columns binding capacities and/or flow rates can be compensated for by adjusting for how long, and in which position, the different columns should be in the loading zone according to the determined breakthrough and saturation points.

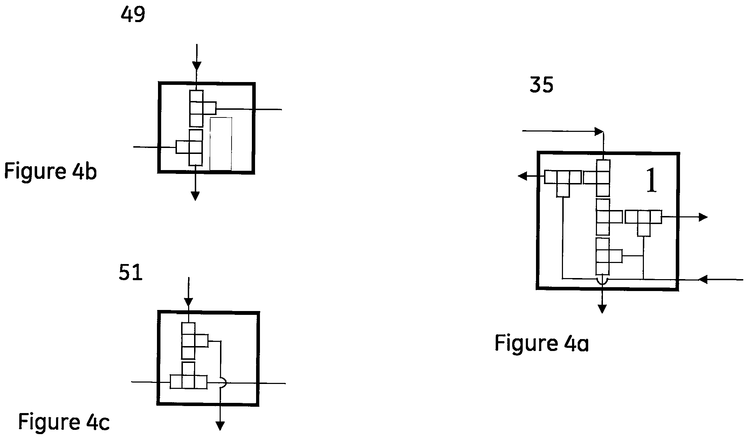

In Figure 3 a feed pump 31 is shown connected via a first detector 33 to a first valve block 35. A buffer pump 37 is also connected to this first valve block 35. The first valve block 35 is further connected to the inlet of a first column 39 via a first T-valve 41. An outlet end of the first column 39 is connected to a second T-valve 43 through a second detector 45. The first valve block 35 is further connected to the inlet of a second column 47 via a second valve block 49. An outlet end of the second column 47 is connected to a third valve block 51 via a third detector 53. Furthermore, a third T-valve 55 is connected between the second T-valve 43 and the third valve block 51. The third T-valve 55 is also connected to a fourth T-valve 57 which is also connected to the first T-valve 41 and the second valve block 49. Hereby the effluent from the first column 39 can be directed to the inlet of the second column 47 through T-valves 43, 55, 57 and block valve 49. Furthermore the first valve block 35 is connected to the inlet of a third column 59 via a fifth T-valve 61. An outlet end of the third column 59 is connected to a sixth T-valve 63 via a fourth detector 65. Furthermore a seventh T-valve 67 is connected between the third valve block 51 and the sixth T-valve 63. The seventh T-valve 67 is also connected to a eighth T-valve 69 which is also connected to the second valve block 49 and the fifth T-valve 61. Hereby the effluent from the second column 47 can be directed to the inlet of the third column 59. The effluent from the third column 59 can be directed to the inlet of the first column 39 through valves 63, 67, 51 55, 57 and 41. The construction of the first valve block 35 is schematically shown in Figure 4a, the construction of the second valve block 49 is schematically shown in Figure 4b and the constructions of the third valve block 51 is schematically shown in Figure 4c. In these Figures each group of four boxes represent a T-valve (3 way valve). Furthermore, according to the invention the first, second, third and fourth detectors 33, 45, 53, 65 are all connected to a determining unit 71. The determining unit is adapted to use the detected signals from the detectors to determine breakthrough and saturation points for the three different columns. The determining unit 71 and all the valve blocks and T-valves and pumps are further connected to a control unit 73 (all the connections are not shown in the Figure) which is adapted to control the chromatography system in terms of when to remove or add columns from/into the loading zone, change flow rates, start new wash steps, etc. The detectors 33, 45, 53, 65 are in one embodiment UV detectors. Other examples of detectors that can be used for this invention have previously been discussed.

In one embodiment of the invention the chromatography process carried out in the system of Figure 3 comprises:

(a) Continuously monitoring a signal in the feed line with the first detector 33 and in effluent from each of the columns 39, 47, 59 (with the second, third and fourth detectors 45, 53, 65) and calculating a difference between the feed signal shifted back in time by a predefined delay time and the effluent signals in the outflow line from each column 39, 47, 59;

(b) passing feed comprising at least one target compound across a $1^{st}$ adsorbent (chromatography media in the first column 39), and directing the outflow from the $1^{st}$ adsorbent to a $2^{nd}$ adsorbent (chromatography media in the second column 47) when the Deltasignal (definition as described above in relation to Figure 2) measured between the feed line and the effluent from the $1^{st}$ adsorbent reaches a predetermined value x1;

(c) redirecting the feed to the $2^{nd}$ adsorbent, and passing wash liquid across the $1^{st}$ adsorbent to which target compound has bound when the Deltasignal measured between the feed line and the effluent from a $1^{st}$ adsorbent reaches a predetermined value x2;

(d) directing the wash liquid outflow to the $3^{rd}$ adsorbent (chromatography media in the third column 59) and subsequently directing the outflow from the $2^{nd}$ adsorbent to the $3^{rd}$ adsorbent when the Deltasignal measured between the feed line and the effluent from a $2^{nd}$ adsorbent reaches a predetermined value x1;

(e) regenerating the $1^{st}$ adsorbent;

(f) redirecting the feed to said $3^{rd}$ adsorbent, and passing wash liquid across the $2^{nd}$ adsorbent to which target compound has bound when the Deltasignal measured between the feed line and the effluent from a $2^{nd}$ adsorbent reaches a predetermined value x2;

(g) directing the wash liquid outflow to the 1st adsorbent, and subsequently directing the outflow from the 3rd adsorbent to the 1st adsorbent when the Deltasignal measured between the feed line and the effluent from a 3rd adsorbent reaches a predetermined value x1;

(h) regenerating the 2nd adsorbent;

(i) redirecting the feed to said 1st adsorbent, and passing wash liquid across the 3rd adsorbent to which target compound has bound when the Deltasignal measured between the feed line and the effluent from a 3rd adsorbent reaches a predetermined value x2;

(j) directing the wash liquid outflow to the 2nd adsorbent, and subsequently directing the outflow from the 1st adsorbent to the 2nd adsorbent when the Deltasignal measured between the feed line and the effluent from a 1st adsorbent reaches a predetermined value x1;

(k) regenerating the 3rd adsorbent;

(l) repeating steps (b)-(k);

wherein at least one target compound is collected in step (d), (g) and/or (j).

Predetermined values of x1 and x2 represent breakthrough and saturation points, respectively.

The current invention enable use of not identical columns when operating a counter current system because any differences in the columns properties can be compensated for by automatically adjusting breakthrough and saturation switching points based on the Deltasignal and Deltsignalmax measured for each of the columns. It also enable operating a counter current system when unexpected changes in feed concentration occur as any change in the feed concentration, and thus a change in the mass loaded into each column can be compensated for by automatically adjusting the breakthrough and saturation switching points based on Deltasignal and Deltasignalmax that automatically compensates for variation in feed concentration.

In another embodiment of the invention, the chromatography system comprising of more than 2 chromatography columns can be used for direct capture of a product from a feed stream originated from a perfusion cell culture. For a person skilled in art, it is well known that concentrations of components in such stream will vary with time, and without an automated control algorithm operation of the chromatography system would be impossible without a risk of significant losses of product due to wrongly *a priori* assigned redirection points.

EXAMPLE

The present example is provided for illustrative purposes only, and should not be construed as limiting the present invention as defined by the appended claims.

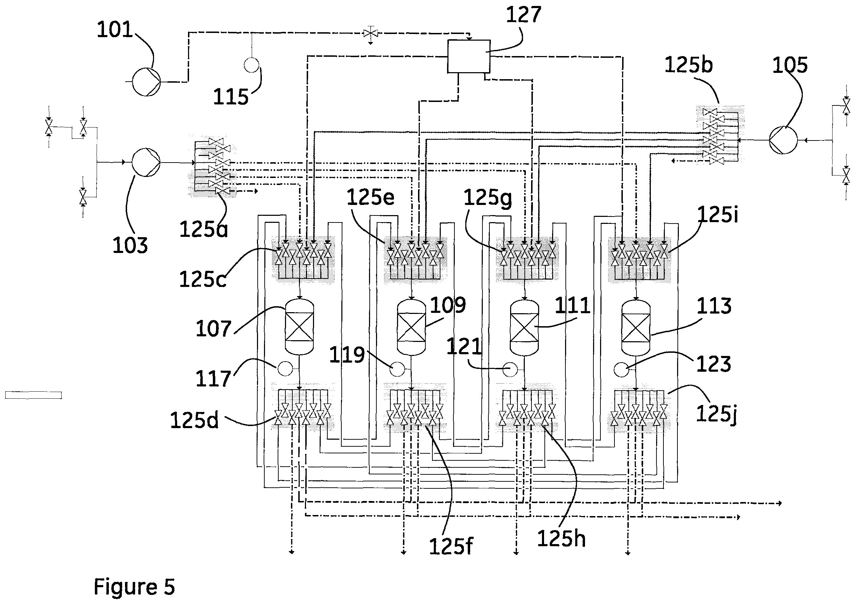

This example illustrates a continuous primary capture step for purification of a monoclonal antibody (MAb) from a mixture containing MAb and bovine serum albumin, BSA, on protein A chromatography resin using a four column periodic counter current (4C-PCC) system with deltaUVmax control according to the invention (i.e. in this example the detectors are UV detectors and the Deltasignalmax is called deltaUVmax). More specifically, four similar columns were packed with the Protein A chromatography resin MabSelect™ (GE Healthcare Bio-Sciences, Uppsala, Sweden). The columns were connected to a custom modified ÄKTAexplorer™ (GE Healthcare Bio-Sciences, Uppsala, Sweden) chromatography system (Fig. 5) that was configured into a four column periodic counter current system, 4C-PCC with an automated control function based on continuous comparison of UV signals measured before and after each of the four columns. The system comprises three independent pumps, a feed pump 101, a first buffer pump 103 and a second buffer pump 105. The system further comprises a first column 107, a second column 109, a third column 111 and a fourth column 113. The system further comprises 5 UV detectors, a first UV detector 115 positioned on the feed line, a second UV detector 117 positioned after the first column 107, a third UV detector 119 positioned after the second column 109, a fourth UV detector 121 positioned after the third column 111 and a fifth UV detector 123 positioned after the fourth column 113. The system further comprises several rotary valves 125a-j and a flow splitter 127. The UV detectors 115, 117, 119, 121, 123 are position such that a feed stream and an effluent from each of the columns was passed through a UV detector (Figure 5). Absorbance from each UV detector were recorded using UNICORN™ software (GE Healthcare Bio-Sciences, Uppsala, Sweden). UNICORN™ is also used for control of all pumps and valves. Eluted from the protein A columns MAb was collected in a single pool.

The following single column chromatography cycle was used as a base for operating the 4C-PCC system in a continuous manner: 1) column equilibration with 3 column volume (CV) of buffer A; 2) column loading with feed; 3) column wash with 4CV of buffer A; 4) column elution with 4CV of buffer B; 5) column CIP with 4CV of buffer C; and, 6) column regeneration with 3 CV of buffer A. All steps were performed at 0.4 mL/min flow rate.

Composition of solutions used is given below:

Buffer A: PBS, pH 7
Buffer B: 0.1 M Sodium citrate, pH = 3.5

Buffer C: 50 mM NaOH
Feed: ~2.00 g/L MAb and 3 mg/ml BSA (Sigma) dissolved in buffer A

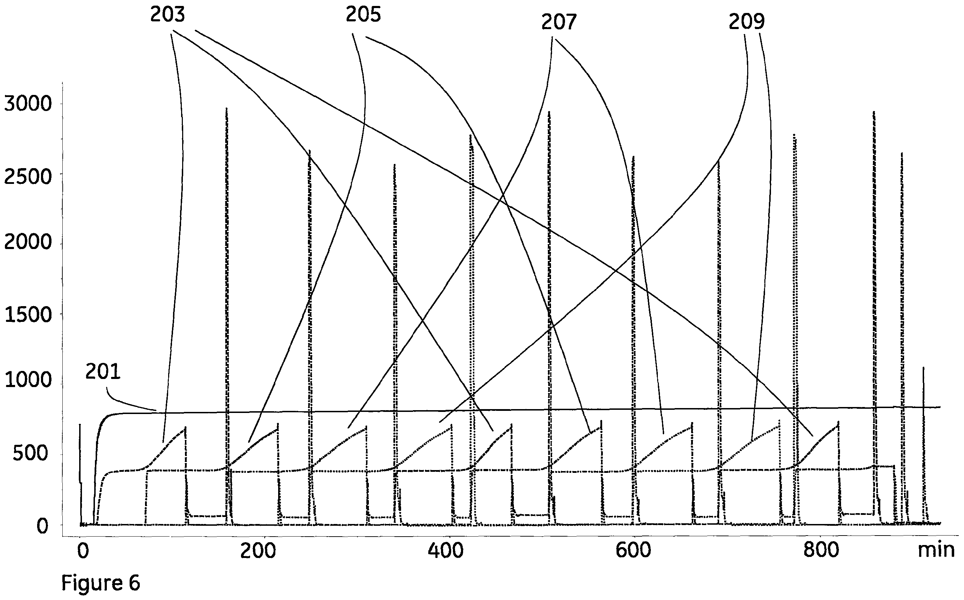

Few hundred milliliters of solution containing the feed were continuously fed into the experimental 4C-PCC setup described above. The absorbance of the feed solution was measured continuously by the first UV detector 115 positioned on the feed line (Figure 5). The purified MAb was eluted from the system in a discreet manner by applying the buffer B into the saturated column. The saturated column was washed prior to the elution step. In Figure 6, signals recorded in the feed line and in the effluent from each of the chromatography columns 107, 109, 111, 113 during the first, a start-up, 4C-PCC cycle consisting of: 1) loading of the feed into the first column 107; 2) connecting the 1st and the 2nd columns 107, 109 in series; 3) directing the feed into the 2nd column 109 while washing the 1st column 107 into the 3rd column 111; 4) connecting the 2nd and the 3rd columns 109, 111 in series while applying the feed; 5) eluting the 1st column 107; 6) regenerating the 1st column 107; 7) directing the feed to the 3rd column 111 while washing the 2nd column 109 in to the 4th column 113; 8) connecting the 3rd and the 4th columns 111, 113 in series while continuously applying the feed; 9) eluting the 2nd column 109; 10) regenerating the 2nd column 109; 11) directing the feed to the 4th column 113 while washing the 3rd column 111 in to the 1st column 107; 12) connecting the 4th and the 1st columns 113, 107 in series while continuously applying the feed; 13) eluting the 3rd column 111; 14) regenerating the 3rd column 111; 15) directing the feed to the 1st column 107 while washing the 4th column 113 in to the 2nd column 109; 16) connecting the 1st and the 2nd columns 107, 109 in series while continuously applying the feed; 17) eluting the 4th column 113; 18) regenerating the 4th column 113; 19) repeating steps 3-18 one more time.

The repetitive UV pattern shown in Figure 2 is depicted in Figure 6, where UV signals recorded during 9 single column loadings, representing two 4C-PCC cycles, are presented. The curve denoted 201 is the signal originating from the first UV detector 115 in Figure 5, i.e. this is the feed signal. The curve denoted 203 is the signal originating from the second UV detector 117 in Figure 5, i.e. this is the effluent signal from the first column 107. The curve denoted 205 is the signal originating from the third UV detector 119 in Figure 5, i.e. this is the effluent signal from the second column 109. The curve denoted 207 is the signal originating from the fourth UV detector 121 in Figure 5, i.e. this is the effluent signal from the third column 111. The curve denoted 209 is the signal originating from the fifth UV detector 123 in Figure 5, i.e. this is the effluent signal from the fourth column 113. The chromatograms representing concentration of MAb in effluents from each of the column as shown in Figure 6 were obtained by setting deltaUV (i.e. in this example the detectors are UV detectors and the Deltasignal is called deltaUV) criteria for detection of the breakthrough and the saturation points at x = 3% and x = 70% of deltaUVmax signal, respectively, according to the principle described in this invention, where x is given by:

$$x = \frac{\text{deltaUVmax - deltaUV}}{\text{deltaUVmax}} 100\%$$

Summary of results obtained in this experiment is shown in Tables 1 and 2 below. Where the volume of feed solution and the calculated amount loaded onto each column is shown. These data are compared to the calculated results that would be obtained if no automated controlled according to this invention was used, i.e., using predesignated switching times of flow redirection as described in point 1-18 were used if the reference run were performed on the same system with the same columns. As shown in Figure 6, the UV signal measured in the effluent from the first column 107 shows that a load onto the first column was shorter before the breakthrough of MAb was observed as compared to the loads applied to the other three column until the same levels of breakthrough. This premature breakthrough indicate that either the amount of the resin in this column or the resin itself was different than in the other two columns. In fact, prior to 4C-PCC experiment the first column 107 was treated to reduce its binding capacity and by doing so making it different from the other three columns.

Because the first column 107 was different than the second column 109 a premature breakthrough for this column would have been observed in an experiment when the 4C-PCC system was operated based on predefined column switching times. Under such conditions, a loss in MAb during step 1 of the cycle would have been observed. In addition, the amount of MAb loaded onto the second column 109 in step 2 would be larger than calculated and subsequently some of the MAb would be lost in the effluent from the second column 109 before this column would be connected to the third column 111 in step 4. This mismatch in amounts loaded onto the columns would then propagate through steps 5-18, and the amount of MAb not capture by the columns would steadily increase with each column switch. This loss in unbound MAb was avoided by implementing the control algorithm according to the current invention. In Table 1, estimated masses of MAb loaded onto each of the columns during the experiment are shown. The masses loaded were estimated based on the areas above respective UV curves measured in the effluent lines after each column. The mass washed out from one column and loaded on the second to the next column in series was neglected. As shown in Table 1 significantly different mass of MAb was loaded on to the first column 107 as compared to the mass loaded on the other three columns. The mass loaded on the first column 107 was between 20 - 30% smaller than the mass loaded on each of the other columns during two different cycles that was almost the same with no more than 5% difference between columns and cycles. If on the other hand, the 4C-PCC system was operated without the automated control with a switch time set to enable load of 77 mg per milliliter resin, the amount of MAb lost per cycle and column would be significant (Table 2) and would account for around 10% of mass loaded on to the system during the whole experiment.

Table 1

| Summary of 4C-PCC run. Mass of MAb in milligrams loaded on each columns during the two loading cycles.* | | | |
|---|---|---|---|
| | Load 1 | Load 2 | Load 3 |
| First column | 54.3 | 56.6 | 55.8 |
| Second column | 77.1 | 74.2 | - |
| Third column | 74.4 | 76.5 | - |
| Fourth column | 73.8 | 74.9 | - |
| * The first column was loaded three times | | | |

Table 2. Estimated mass that would be lost (found in the waste stream) per cycle and column if the 4C-PCC was operated at the constant switching time equivalent to the load of 77 g per liter resin.

| | Load 1 | Load 2 | Load 3 |
|---|---|---|---|
| First column | 22.7 | 20.4 | 21.2 |
| Second column | -0.1 | 2.8 | |
| Third column | 2.6 | 0.5 | |
| Fourth column | 3.2 | 2.1 | |

**Claims**

1. A method for determining binding capacities of each chromatography column (1; 39, 47, 59; 107, 109, 111, 113) in a periodic counter current (PCC) system, the method comprising:

   - detecting a feed signal (21; 201) representative of the composition of a feed material provided to the inlet of the columns; and
   - detecting an effluent signal (23; 203, 205, 207, 209) representative of the composition of effluent from each of the columns;

   the method being **characterised in that** the feed signal and the effluent signals are used to continuously determine binding capacities of the different chromatography columns (39, 47, 59; 107, 109, 111, 113) of the PCC system during the chromatography process.

2. A method according to claim 1 comprising detecting the feed signal (21; 201) and the effluent signal (23; 203, 205, 207, 209) using the same type of detector (11, 13; 33, 45, 53, 65; 115, 117, 119, 121, 123).

3. A method according to any one of the preceding claims, further comprising

   - using the feed signal (21; 201) and the effluent signal (23; 203, 205, 207, 209) to determine a deltasignal being the feed signal minus the effluent signal and a deltasignalmax (27) being the feed signal minus the effluent signal when the effluent signal shows a plateau (25) due to the fact that substantially all the non binding components have passed the column.

4. A method according to claim 3, comprising compensating for a time delay when determining the deltasignal and the deltasignalmax, said time delay representing the time it takes for a non-binding component to pass the column.

**5.** A method according to claim 3 or 4, comprising using the deltasignal to determine a breakthrough point (c) and/or a saturation point (d) of the column, said breakthrough point and saturation point being calculated as a respective certain predefined percentage of the deltasignalmax (27).

**6.** A method according to any one of the preceding claims, comprising detecting the UV absorbance in the feed material and the effluent.

**7.** A method according to any one of the claims 1-5, comprising detecting the pH, conductivity, light scattering, fluorescence, IR or visible light in the feed material and the effluent.

**8.** A chromatography system comprising at least two chromatography columns (1; 39, 47, 59; 107, 109, 111, 113) in a periodic counter current system, and comprising:

- a first detector (11; 33; 115) adapted to detect a feed signal (21; 201) being representative of the composition of a feed material provided to the inlet of the at least two columns;
- a second detector (13; 45, 53, 65; 117, 119, 121, 123) after each column adapted to detect an effluent signal (23; 203) being representative of the composition of effluent from each of the columns (1; 39,47, 59; 107, 109, 111, 113) of the system; and
- a determining unit (15; 71) connected to said detectors;

the system being **characterised in that** said determining unit is adapted to determine continuously during the chromatography process the binding capacities of each column (1; 39, 47,59; 107,109,111,113) based on said feed signal and said effluent signals.

**9.** A chromatography system according to claim 8, wherein all the detectors (11, 13; 33, 45, 53, 65; 115, 117, 119, 121, 123) are of the same type.

**10.** A chromatography system according to any one of the claims 8 or 9, wherein said determining unit (15; 71) is adapted to use the feed signal (21; 201) and the effluent signals (23; 203, 205, 207, 209) to determine for each column (1; 39, 47, 59; 107, 109, 111, 113) a deltasignal being the feed signal minus the effluent signal and a deltasignalmax (27) being the feed signal minus the effluent signal when the effluent signal shows a plateau (25) due to the fact that substantially all the non binding components have passed the column.

**11.** A chromatography system according to claim 10, wherein said determining unit (15; 71) further is adapted to compensate for a time delay when determining the deltasignal and the deltasignalmax, said time delay representing the time it takes for non-binding components to pass the column.

**12.** A chromatography system according to claim 10 or 11, wherein said determining unit (15; 71) further is adapted to use the deltasignal to determine a breakthrough point (c) and/or a saturation point (d) of the column, said breakthrough point and saturation point being calculated as a respective predefined percentage of the deltasignalmax (27).

**13.** A chromatography system according to any one of the claims 8-12, further comprising a control unit (73) connected to the determining unit (15; 71) and adapted to continuously monitor said determined binding capacities during the chromatography process and in real time control the start and stop of different chromatography process steps in dependence of said determined binding capacities.

**14.** A chromatography system according to any one of the claims 8-13, wherein said detectors (11, 13; 33, 45, 53, 65; 115, 117, 119, 121, 123) are UV detectors.

**15.** A chromatography system according to any one of the claims 8-14, wherein said detectors (11, 13; 33, 45, 53, 65; 115, 117, 119, 121, 123) are pH, conductivity, light scattering, fluorescence, IR or visible light detectors.

**Patentansprüche**

**1.** Verfahren zum Bestimmen von Bindungskapazitäten von jeder Chromatographiesäule (1; 39, 47, 59; 107, 109, 111, 113) in einer periodischen Gegenstromanlage (periodic counter current system, PCC), wobei das Verfahren umfasst:

- Detektieren eines Einspeisungssignals (21; 201), das für die Zusammensetzung des Einspeisungsmaterials, dass dem Einlass der Säulen bereitgestellt wird, repräsentativ ist; und
- Detektieren eines Ausflusssignals (23; 203, 205, 207, 209), das für die Zusammensetzung des Ausflusses von jeder der Säulen repräsentativ ist;

wobei das Verfahren **dadurch gekennzeichnet ist, dass** das Einspeisungssignal und das Ausflusssignal kontinuierlich verwendet werden, um Bindungskapazitäten der unterschiedlichen Chromatographiesäulen (39, 47, 59; 107, 109, 111, 113) der PCC-Anlage während des Chromatographieprozesses zu bestimmen.

2. Verfahren nach Anspruch 1, umfassend das Detektieren des Einspeisungssignals (21; 201) und des Ausflusssignals (23; 203, 205, 207, 209) unter Verwendung des gleichen Detektortyps (11, 13; 33, 45, 53, 65; 115, 117, 119, 121, 123).

3. Verfahren nach einem der vorstehenden Ansprüche, weiter umfassend

- Verwenden des Einspeisungssignals (21; 201) und des Ausflusssignals (23; 203, 205, 207, 209), um ein Deltasignal zu bestimmen, das das Einspeisungssignal minus das Ausflusssignal ist, und ein Deltasignalmaximum (27), das das Einspeisungssignal minus das Ausflusssignal ist, wenn das Ausflusssignal aufgrund der Tatsache, dass im Wesentlichen alle der nichtbindenden Bestandteile die Säule passiert haben, ein Plateau (25) zeigt.

4. Verfahren nach Anspruch 3, umfassend das Kompensieren für eine Zeitverzögerung beim Bestimmen des Deltasignals und des Deltasignalmaximums, wobei die Zeitverzögerung die Zeit repräsentiert, die es für einen nichtbindenden Bestandteil dauert, die Säule zu passieren.

5. Verfahren nach Anspruch 3 oder 4, umfassend das Verwenden des Deltasignals, um einen Durchbruchpunkt (c) und/oder einen Sättigungspunkt (d) der Säule zu bestimmen, wobei der Durchbruchpunkt und Sättigungspunkt als ein entsprechender gewisser vordefinierter Prozentsatz des Deltasignalmaximums (27) berechnet werden.

6. Verfahren nach einem der vorstehenden Ansprüche, umfassend das Detektieren der UV-Absorption in dem Einspeisungsmaterial und dem Ausfluss.

7. Verfahren nach einem der Ansprüche 1-5, umfassend das Detektieren des pH-Werts, der Lichtstreuung, Fluoreszenz, des IR- oder sichtbaren Lichts in dem Einspeisungsmaterial und dem Ausfluss.

8. Chromatographieanlage, umfassend mindestens zwei Chromatographiesäulen (1; 39, 47, 59; 107, 109, 111, 113) in einer periodischen Gegenstromanlage, und umfassend:

- einen ersten Detektor (11; 33; 115), angepasst, um ein Einspeisungssignal (21; 201) zu detektieren, das für die Zusammensetzung eines Einspeisungsmaterials, das dem Einlass der Säulen der mindestens zwei Säulen bereitgestellt wird, repräsentativ ist;
- einen zweiten Detektor (13; 45, 53, 65; 117, 119, 121, 123) nach jeder Säule, angepasst, um ein Ausflusssignal (23; 203) zu detektieren, das für die Zusammensetzung des Ausflusses von jeder der Säulen (1; 39, 47, 59; 107, 109, 111, 113) der Anlage repräsentativ ist; und
- eine Bestimmungseinheit (15; 71), die mit den Detektoren verbunden ist;

wobei die Anlage **dadurch gekennzeichnet ist, dass** die Bestimmungseinheit angepasst ist, um während des Chromatographieprozesses kontinuierlich die Bindungskapazitäten jeder Säule (1; 39, 47, 59; 107, 109, 111, 113) auf Grundlage des Einspeisungssignals und des Ausflusssignals zu bestimmen.

9. Chromatographieanlage nach Anspruch 8, wobei alle der Detektoren (11, 13; 33, 45, 53, 65; 115, 117, 119, 121, 123) vom gleichen Typ sind.

10. Chromatographieanlage nach einem der Ansprüche 8 oder 9, wobei die Bestimmungseinheit (15; 71) angepasst ist, das Einspeisungssignal (21; 201) und das Ausflusssignal (23; 203, 205, 207, 209) zu verwenden, um für jede Säule (1; 39, 47, 59; 107, 109, 111, 113) ein Deltasignal zu bestimmen, das das Einspeisungssignal minus das Ausflusssignal ist, und ein Deltasignalmaximum (27), das das Einspeisungssignal minus das Ausflusssignal ist, wenn das Ausflusssignal aufgrund der Tatsache, dass im Wesentlichen alle der nichtbindenden Bestandteile die Säule passiert haben, ein Plateau (25) zeigt.

**11.** Chromatographieanlage nach Anspruch 10, wobei die Bestimmungseinheit (15; 71) weiter angepasst ist, um für eine Zeitverzögerung beim Bestimmen des Deltasignals und des Deltasignalmaximums zu kompensieren, wobei die Zeitverzögerung die Zeit repräsentiert, die es für nichtbindende Bestandteile dauert, die Säule zu passieren.

**12.** Chromatographieanlage nach Anspruch 10 oder 11, wobei die Bestimmungseinheit (15; 71) weiter angepasst ist, um das Deltasignal zu verwenden, um einen Durchbruchpunkt (c) und/oder einen Sättigungspunkt (d) der Säule zu bestimmen, wobei der Durchbruchpunkt und Sättigungspunkt als ein entsprechender vordefinierter Prozentsatz des Deltasignalmaximums (27) berechnet werden.

**13.** Chromatographieanlage nach einem der Ansprüche 8-12, weiter umfassend eine Steuerungseinheit (73), die mit der Bestimmungseinheit (15; 71) verbunden und angepasst ist, die bestimmten Bindungskapazitäten während des Chromatographieprozesses kontinuierlich zu überwachen und den Start und Stopp von unterschiedlichen Chromatographieprozessschritten in Abhängigkeit der bestimmten Bindungskapazitäten in Echtzeit zu steuern.

**14.** Chromatographieanlage nach einem der Ansprüche 8-13, wobei die Detektoren (11, 13; 33, 45, 53, 65; 115, 117, 119, 121, 123) UV-Detektoren sind.

**15.** Chromatographieanlage nach einem der Ansprüche 8-14, wobei die Detektoren (11, 13; 33, 45, 53, 65; 115, 117, 119, 121, 123) pH-Wert-, Leitfähigkeits-, Lichtstreuungs-, Fluoreszenz-, IR-Licht- oder Sichtbares-Licht-Detektoren sind.

**Revendications**

**1.** Procédé de détermination des capacités de liaison de chaque colonne de chromatographie (1 ; 39, 47, 59 ; 107, 109, 111, 113) dans un système à contre-courant périodique (PCC), le procédé comprenant :

- la détection d'un signal d'alimentation (21 ; 201) représentatif de la composition d'une matière d'alimentation fournie à l'entrée de la colonne ; et
- la détection d'un signal d'effluent (23 ; 203, 205, 207, 209) représentatif de la composition de l'effluent provenant de chacune des colonnes ;

le procédé étant **caractérisé en ce que** le signal d'alimentation et les signaux d'effluent sont utilisés pour déterminer en continu les capacités de liaison des différentes colonnes de chromatographie (39, 47, 59 ; 107, 109, 111, 113) du système PCC pendant le procédé de chromatographie.

**2.** Procédé selon la revendication 1 comprenant la détection du signal d'alimentation (21 ; 201) et du signal d'effluent (23 ; 203, 205, 207, 209) en utilisant le même type de détecteur (11, 13 ; 33, 45, 53, 65 ; 115, 117, 119, 121, 123).

**3.** Procédé selon l'une quelconque des revendications précédentes, comprenant en outre

- l'utilisation du signal d'alimentation (21 ; 201) et du signal d'effluent (23 ; 203, 205, 207, 209) pour déterminer un deltasignal qui est le signal d'alimentation moins le signal d'effluent et un deltasignalmax (27) qui est le signal d'alimentation moins le signal d'effluent quand le signal d'effluent présente un plateau (25) en raison du fait que sensiblement tous les composants non liants ont traversé la colonne.

**4.** Procédé selon la revendication 3, comprenant la compensation d'un délai lors de la détermination du deltasignal et du deltasignalmax, ledit délai représentant le temps qu'il faut à un composant non liant pour traverser la colonne.

**5.** Procédé selon la revendication 3 ou 4, comprenant l'utilisation du deltasignal pour déterminer un point de percée (c) et/ou un point de saturation (d) de la colonne, lesdits point de percée et point de saturation étant calculés sous la forme d'un certain pourcentage prédéfini respectif du deltasignalmax (27).

**6.** Procédé selon l'une quelconque des revendications précédentes, comprenant la détection de l'absorbance UV dans la matière d'alimentation et l'effluent.

**7.** Procédé selon l'une quelconque des revendications 1 à 5, comprenant la détection du pH, de la conductivité, de la diffusion de lumière, de la fluorescence, de l'IR ou de la lumière visible dans la matière d'alimentation et l'effluent.

8. Système de chromatographie comprenant au moins deux colonnes de chromatographie (1 ; 39, 47, 59 ; 107, 109, 111, 113) dans un système à contre-courant périodique, et comprenant :

 - un premier détecteur (11 ; 33 ; 115) adapté pour détecter un signal d'alimentation (21 ; 201) qui est représentatif de la composition d'une matière d'alimentation fournie à l'entrée des au moins deux colonnes ;
 - un second détecteur (13 ; 45, 53, 65 ; 117, 119, 121, 123) après chaque colonne adapté pour détecter un signal d'effluent (23 ; 203) qui est représentatif de la composition de l'effluent provenant de chacune des colonnes (1 ; 39, 47, 59 ; 107, 109, 111, 113) du système ; et
 - une unité de détermination (15 ; 71) connectée auxdits détecteurs ;

le système étant **caractérisé en ce que** ladite unité de détermination est adaptée pour déterminer en continu pendant le procédé de chromatographie les capacités de liaison de chaque colonne (1 ; 39, 47, 59; 107, 109, 111, 113) sur la base dudit signal d'alimentation et desdits signaux d'effluent.

9. Système de chromatographie selon la revendication 8, dans lequel tous les détecteurs (11, 13 ; 33, 45, 53, 65 ; 115, 117, 119, 121, 123) sont du même type.

10. Système de chromatographie selon l'une quelconque des revendications 8 ou 9, dans lequel ladite unité de détermination (15; 71) est adaptée pour utiliser le signal d'alimentation (21; 201) et les signaux d'effluent (23; 203, 205, 207, 209) pour déterminer pour chaque colonne (1 ; 39, 47, 59 ; 107, 109, 111, 113) un deltasignal qui est le signal d'alimentation moins le signal d'effluent et un deltasignalmax (27) qui est le signal d'alimentation moins le signal d'effluent quand le signal d'effluent présente un plateau (25) en raison du fait que sensiblement tous les composants non liants ont traversé la colonne.

11. Système de chromatographie selon la revendication 10, dans lequel ladite unité de détermination (15; 71) est en outre adaptée pour compenser un délai lors de la détermination du deltasignal et du deltasignalmax, ledit délai représentant le temps qu'il faut aux composants non liants pour traverser le colonne.

12. Système de chromatographie selon la revendication 10 ou 11, dans lequel ladite unité de détermination (15; 71) est en outre adaptée pour utiliser le deltasignal pour déterminer un point de percée (c) et/ou un point de saturation (d) de la colonne, lesdits point de percée et point de saturation étant calculés sous la forme d'un pourcentage prédéfini respectif du deltasignalmax (27).

13. Système de chromatographie selon l'une quelconque des revendications 8 à 12, comprenant en outre une unité de commande (73) connectée à l'unité de détermination (15 ; 71) et adaptée pour surveiller en continu lesdites capacités de liaison déterminées pendant le procédé de chromatographie et commander en temps réel le début et la fin de différentes étapes de procédé de chromatographie en fonction desdites capacités de liaison déterminées.

14. Système de chromatographie selon l'une quelconque des revendications 8 à 13, dans lequel lesdits détecteurs (11, 13 ; 33, 45, 53, 65 ; 115, 117, 119, 121, 123) sont des détecteurs UV.

15. Système de chromatographie selon l'une quelconque des revendications 8 à 14, dans lequel lesdits détecteurs (11, 13 ; 33, 45, 53, 65 ; 115, 117, 119, 121, 123) sont des détecteurs de pH, de conductivité, de diffusion de lumière, de fluorescence, d'IR ou de lumière visible.

Fig. 1

EP 2 446 257 B1

Fig. 2

= T-valve

Fig. 3

Figure 4a

Figure 4b

Figure 4c

Figure 5

EP 2 446 257 B1

Figure 6

EP 2 446 257 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3291726 A
- WO 9202815 A
- WO 2008153472 A
- US 5457260 A

**Non-patent literature cited in the description**

- **BISCHOPS, M. ; PENNINGS, M.** Simulated Moving Bed technology in Biopharmaceutical Processing. *Recovery Biological Products XI,* 2003
- **HEETER, G.A. ; LIAPIS, A.I.** *J. Chrom A,* 1995, 711
- **LACKI, K.M. ; BRYNTESSON, L.M.** Protein A Counter-Current Chromatography for Continuous Antibody Purification. ACS, 2004